# FASCICULE DE BREVET EUROPEEN

(11) **EP 1 894 332 B1**
(45) Date de publication et mention de la délivrance du brevet: **15.10.2014**
(21) Numéro de dépôt: 06763625.8
(22) Date de dépôt: 09.06.2006
(51) Int. Cl.: H04J 3/06

(54) **ARCHITECTURE RADAR GENERIQUE**
GENERISCHE RADAR-ARCHITEKTUR
GENERIC RADAR ARCHITECTURE

(30) Priorité: 10.06.2005 FR 0505927
(43) Date de publication de la demande: 05.03.2008
(73) Titulaire: Thales, 92200 Neuilly-sur-Seine (FR)
(72) Inventeur: ELLEAUME, Philippe, F-92160 Antony (FR)
(74) Mandataire: Lucas, Laurent Jacques
(86) Numéro de dépôt international: PCT/EP2006/063059
(87) Numéro de publication internationale: WO 2006/131561

(56) Documents cités:
- US-A1- 2006 041 631
- SIVRIKAYA F ET AL: "TIME SYNCHRONIZATION IN SENSOR NETWORKS: A SURVEY" IEEE NETWORK, IEEE SERVICE CENTER, NEW YORK, NY, US, vol. 18, no. 4, juillet 2004 (2004-07), pages 45-50, XP001220892 ISSN: 0890-8044

## Description

### DOMAINE DE L'INVENTION

L'invention se rapporte au domaine général des architectures de systèmes électroniques et/ou informatiques complexes et en particulier au domaine des structures d'échange d'informations entre les différents éléments de telles architectures. Elle intéresse tout particulièrement les systèmes complexes pour lesquels les échanges prennent la forme de flux de donnés irréguliers engendrés par des fonctions de traitement de durées variables dans le temps.

Elle s'applique en particulier à la construction de senseurs électromagnétiques ou acoustiques, tels que les radars et les sonars.

### CONTEXTE DE L'INVENTION - ART ANTERIEUR

Les concepteurs actuels de senseurs électromagnétiques ou acoustiques sont affrontés à de nouveaux problèmes liés en particulier à la grande complexité des fonctions réalisées par les sous-ensembles de traitement qui composent ces systèmes. La complexité de ces fonctions est autant due à la complexité des opérations réalisées qu'à la grande variation des quantités d'informations (flux d'informations) traitées d'une phase de fonctionnement du système à l'autre. Ainsi une même fonction peut avoir à traiter aussi bien un flot de données de grande taille qu'un flot de donnée de taille très courte. Elle peut même avoir à traiter des alternances variables de flots de données longs et de flots de données courts. Ceci implique en particulier que pour une même fonction, le temps de traitement peut varier dans une large mesure, cette variabilité engendrant par voie de conséquence une irrégularité au cours du temps des flux de données transmis d'une unité fonctionnelle autonome, ou noeud de traitement, à une autre. Les fonctions réalisées sont par ailleurs de plus en plus élaborées et entraînent des charges de calcul de plus en plus importantes et des séquencements de plus en plus complexes.

Cet accroissement présent et surtout futur des performances souhaitées, s'accommode mal des architectures classiques autour desquelles sont notamment conçus les systèmes actuels. Ces architectures sont généralement basées sur le développement de machines synchrones effectuant des tâches certes autonomes, mais dont l'ensemble du séquencement est assuré au moyen de signaux délivrés par un noeud de traitement particulier et dont les échanges sont étroitement synchronisés. Or l'irrégularité des flux de données rend le développement d'un tel noeud de traitement très difficile.

De telles architectures ont pour effet de morceler les systèmes ainsi conçus en assemblages de sous-ensembles effectuant des tâches de traitement, chaque sous-ensemble étant cadencé par un jeu de signaux de synchronisation dédié, fourni par un sous-ensemble chargé de générer les différents signaux de synchronisation. Elles entravent ainsi une démarche de conception plus intégrée dans laquelle le système est considéré dans son entier comme une machine unique multifonction.

Ce morcellement associé à un trop grand synchronisme des échanges conduit à ce que le système réalisé subit une limitation de sa capacité de traitement, en terme de quantité d'informations traitées. Cette limitation directement imputable à l'architecture adoptée entrave l'accroissement nécessaire de la capacité de calcul des systèmes, accroissement que les noeuds de traitement composant les sous-ensembles seraient par ailleurs capables de supporter séparément.

Cette limitation rend les architectures classiques difficiles à adopter pour des systèmes futurs pour lesquels le niveau de performance est directement lié à la capacité de calcul et à l'adaptabilité aux variations des flux de données.

Un autre inconvénient des architectures actuelles, est lié à l'organisation du séquencement des différents noeuds de traitement autour d'un séquenceur général responsable de la synchronisation d'ensemble et qui délivre à chacun des autres noeuds de traitement, l'ensemble des signaux de synchronisation dont il a besoin. Cette production centralisée des signaux de synchronisation se traduit dans la pratique par la présence dans les systèmes développés d'un nombre très important de liaisons physiques, qui rend délicate la fabrication et la mise au point de tels systèmes, et entrave leur capacité d'évolution.

Le document publié par F. Sivrikaya et AL, intitulé "TIME SYNCHRONISATION IN SENSOR NETWORKS: A SURVEY" dans la revue IEEE NETWORK, IEEE SERVICE CENTER, New-York, US, vol. 18, no. 4, juillet 2004 (2004-07) (ISSN: 0890-8044) - pages 45 à 50, présente un état de l'art existant, concernant des solutions techniques connues permettant de synchroniser de manière permanente les échanges de données entre deux ou plusieurs équipements distants. Les solutions proposées permettent notamment de s'affranchir des dérives des références de temps locales et des temps de propagation des données. En revanche aucune des solutions décrites ne permet à un équipement autonome en matière de séquencement, intégré à un ensemble d'équipements et coopérant au moyen d'échanges asynchrones avec les autres équipements de cet ensemble pour réaliser une fonction globale, de réaliser de manière simple un traitement des données dont il dispose qui soit synchrone d'une référence de temps commune à l'ensemble des équipements.

Par ailleurs, la demande de brevet US 200610041631 de Yukio Kadowaki, publiée le 23 février 2006 et intitulé **"Method and apparatus for serial communication system capable of identifying slave apparatus using half-duplex channel communication method",** décrit un protocole de communication série entre deux équipements selon lequel les données échangées entre les deux équipements sont transmises sous la forme d'un signal d'horloge modulé par les données à transmettre.

### PRESENTATION DE L'INVENTION

Un des buts de l'invention est de permettre à un système comportant une pluralité de sous-ensembles, d'exploiter de façon optimale les capacités de calcul de chacun des noeuds de traitement qui les constituent, compte tenu du fait que dans une chaîne de tâches donnée, chaque noeud de traitement est amené à effectuer la (ou les) tache(s) qui lui incombe(nt) selon un rythme qui peut être variable dans le temps en fonction notamment des variations du flux des données traitées.

Un autre but est de permettre de concevoir des systèmes pouvant évoluer, un système pouvant intégrer au cours de sa vie des sous-ensembles et /ou des noeuds de traitement dont la capacité de calcul aura évolué de sorte que la capacité traitement du système dans son entier puisse s'accroître.

Un autre but est encore de faciliter la fabrication le maintien en condition opérationnelle et la maintenance de systèmes de plus en plus complexes, en limitant en particulier le type et le nombre des liaisons physiques.

A cet effet, l'invention a pour objet une architecture de système électronique, en particulier une architecture de système de détection radar, comportant une pluralité de noeuds de traitement dans lequel chaque noeud réalise une fonction ou une partie d'une fonction mise en oeuvre par le système. Cette architecture est caractérisée par:
- une liaison de synchronisation unique qui délivre à tous les modules un message commun de synchronisation qui comporte un en-tête simplifié, un top de synchronisation, une horloge de base et une date de référence communes, l'en-tête simplifié permettant de déterminer à quel flot de donné s'applique l'information de synchronisation,
- une pluralité de liaisons asynchrones d'échanges de données, chaque liaison permettant l'échange de messages spécifiques entre deux noeuds de traitement particuliers, les messages échangés comportant des données à traiter, accompagnées d'un en-tête générique commun contenant l'ensemble des informations utilisées par les différents noeuds de traitement du système et relatives à l'étape de fonctionnement du système à laquelle se rapportent les données échangées. Cet en-tête permet à chaque noeud de traitement d'associer les donnée contenues dans un message à une phase déterminée du fonctionnement du système et de déterminer la façon dont il doit traiter ces données.

Selon l'invention, l'en-tête simplifié contenu dans le message de synchronisation est une partie de l'en-tête générique des messages transmis par les liaisons asynchrones, qui correspond à la même étape de fonctionnement du système.

Selon l'invention, chaque noeud de traitement comporte des moyens propres pour s'interfacer avec la liaison de synchronisation et pour réaliser son séquencement interne à partir du message général de synchronisation. Chaque noeud de traitement comporte également des moyens propres pour associer les données transmises par une liaison d'échange de données à l'en-téte correspondante.

Selon l'invention, la liaison de synchronisation transmet une horloge de cadencement H, un top de synchronisation et des trames de données binaires, le top de synchronisation et les données binaires composant les trames étant transmis par modulation du facteur de forme de l'horloge H, la modulation conservant l'écart temporel séparant les fronts montants de l'horloge H.

Selon une caractéristique de l'invention la modulation du facteur de forme de l'horloge H comprend 3 états:
- un état 0 pour lequel l'état haut de l'horloge H à une durée égale à celle de l'état bas, le facteur de forme étant égal à ½,
- un état 1 pour lequel l'état haut de l'horloge H a une durée supérieure à celle de l'état bas, le facteur de forme étant supérieur à ½,
- un état -1 pour lequel l'état haut de l'horloge H a une durée inférieure à celle de l'état bas, le facteur de forme étant inférieur à ½,

Les valeurs des données binaire des trames sont par ailleurs codées sur les deux états 0 et 1, le top de synchronisation étant identifié par le code -1.

Selon une autre caractéristique de l'invention, la transmission d'une trame de donnée sur la liaison de synchronisation est signalée par la transmission d'un top de synchronisation. La transmission d'une trame correspond généralement au début d'exécution d'une tâche opérationnelle par le système. Dans le cadre d'un système radar un exemple de tache opérationnelle peut consister en une rafale

Selon l'invention, chaque noeud de traitement effectue la synchronisation de ses horloges lentes, dont la fréquence est un sous multiple de la fréquence de l'horloge H, au moyen du top de synchronisation.

Selon un mode préféré de mise en oeuvre de l'invention, le top de synchronisation est émis périodiquement, accompagné d'une trame de données contenant des informations de synchronisation utiles ou une trame factice contenant des données non significatives.

Selon ce mode de mise en oeuvre préféré, chaque trame transmise comporte un champ de bits permettant d'indiquer si cette trame est une trame réelle ou si c'est une trame factice.

Selon une variante de mise en oeuvre de l'invention, le top de synchronisation est transmis sur la liaison de synchronisation sous la forme d'une séquence composée d'une succession de bits pouvant prendre les valeurs 0, 1, ou -1, la structure de la séquence étant définie de telle sorte que la reconnaissance par les sous-ensembles du top de synchronisation puisse être réalisée au moyen d'un corrélateur ternaire par la détection d'un plc de corrélation.

Selon une autre variante de réalisation les informations contenues dans la trame binaire font l'objet d'un codage au moyen d'un code détecteur et correcteur d'erreurs.

Cette architecture décentralisée permet avantageusement de renforcer le fonctionnement asynchrone des différents sous-ensembles et noeuds de traitement. Chaque échange de données entre deux noeuds de traitement est réalisé par une liaison asynchrone, sans intervention de signaux de validation ou de synchronisation.
Cette architecture permet également à chaque noeud de traitement de s'adapter aux variations du flux des données échangées.

Le système est ainsi considéré dans son entier comme une seule machine logique dont la capacité de calcul est très supérieure à celle obtenue en faisant fonctionner les mêmes noeuds de traitement avec une architecture synchrone classique. L'architecture selon l'invention permet en outre également de réaliser une découpe fonctionnelle des tâches effectuées par le système, une même fonction pouvant mettre en oeuvre des noeuds de calcul répartis sur différentes entités physiques telles que des circuits imprimés. La découpe fonctionnelle est alors avantageusement indépendante de la découpe physique du système.

L'architecture selon l'invention permet aussi de tirer parti de l'accroissement des capacités de calcul dont peut bénéficier un module à la suite d'une nouvelle conception. Elle permet également d'implémenter des fonctions complémentaires au système, au cours de sa durée de vie, sans que cette implémentation ne nécessite une modification importante de la structure existante du système.

La mise en place d'une liaison unique de synchronisation présente en outre l'avantage de limiter le nombre de liaisons physiques à réaliser. Elle permet à chaque sous-ensemble ou noeud de traitement, d'effectuer de manière autonome la synchronisation de ses propres horloges à partir d'une horloge de cadencement H associée à un top de synchronisation.

### DESCRIPTION DES FIGURES

Ces caractéristiques et avantages, ainsi que d'autres apparaitront plus clairement au fil de la description illustrée par les figures annexées qui représentent:
- la figure 1: une illustration schématique de l'architecture selon l'invention,
- la figure 2: la représentation schématique de la stucture d'interfaçage d'un noeud de traitement développé conformément à l'architecture selon l'invention,
- la figure 3: l'illustration de la structure schématique des moyens que comporte un noeud de traitement réalisant un traitement asynchrone,
- la figure 4: l'illustration de la structure schématique des moyens que comporte un noeud de traitement réalisant un traitement synchrone,
- la figure 5: une illustration de principe du routage des données réalisé dans un noeud de traitement développé conformément à l'architecture selon l'invention.
- la figure 6: une illustration d'un exemple d'association de données avec l'en-tête correspondant,
- la figure 7, une illustration du principe de codage des bits de données par modulation du facteur de forme de l'horloge de cadencement H.
- la figure 8, l'illustration de la structure des signaux et données numériques transmises sur la liaison de synchronisation,
- la figure 9, l'illustration du principe de synchronisation des horloges lentes des noeuds de traitement par la liaison de synchronisation.

### DESCRIPTION DETAILLEE

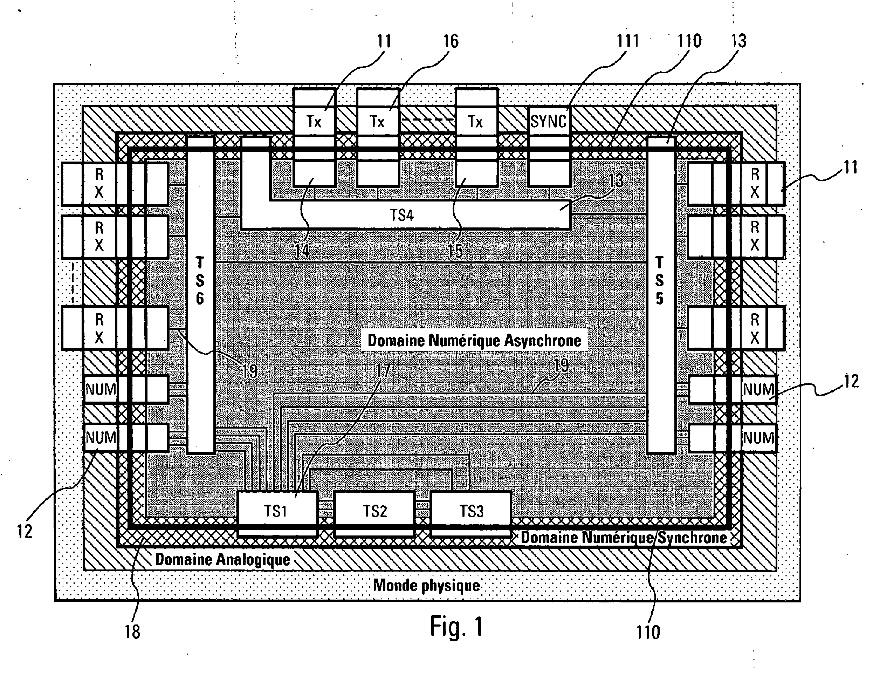

On considère tout d'abord à la figure 1. Cette figure permet de présenter les caractéristiques générales de l'architecture selon l'invention. Elle représente sous forme d'un synoptique fonctionnel l'ensemble des fonctions que peut renfermer un système électronique complexe, tel qu'un radar par exemple. Un tel système peut comporter une première famille de sous-ensembles 11 remplissant des fonctions d'interface avec un milieu externe, milieu qui peut par exemple être l'atmosphère, dans le cas d'un senseur électromagnétique tel qu'un radar, mais qui peut également être le milieu marin pour un senseur acoustique de type sonar, ou encore toute interface spécifique de type capteur physique. Dans le cas spécifique d'un système radar, les sous-ensembles 11 sont par exemple les sous-ensembles chargés de l'émission et de la réception hyperfréquence.
Un tel système peut comporter également un certain nombre de sous-ensembles 12 à vocation analogique dont une des fonctions peut par exemple consister à effectuer la numérisation des signaux échangés par les sous-ensembles 11 avec le milieu extérieur.
Un tel système peut enfin comporter des sous-ensembles numériques 13, comme par exemple des microprocesseurs ou des microcontrôleurs dont les fonctions consistent essentiellement en du traitement synchrone ou asynchrone de données.
S'agissant de systèmes complexes, on conçoit aisément que, bien qu'appartenant globalement à tel ou tel domaine, un sous-ensemble puisse lui-même comporter des éléments appartenant à des domaines autres. Ainsi, par exemple, il est aisé de concevoir qu'un sous-ensemble 11 dont la fonction principale est de servir d'interface avec le monde physique ( atmosphère ou milieu marin par exemple) dispose d'éléments 14 - 15, lui permettant d'échanger des données numériques, de manière synchrone ou asynchrone, avec un noeud de traitement tel qu'un microprocesseur. De même, on conçoit aisément qu'un tel sous-ensemble dispose d'éléments essentiellement analogiques 16 lui permettant de transmettre les signaux reçus du milieu extérieur vers un sous-ensemble 12 chargé de les numériser.

La structure des liaisons entre machines analogique répond généralement à des contraintes et à des normes définies qui sont notamment fonction de la nature des signaux analogiques échangés. Une standardisation particulière de telles liaisons n'est donc en principe pas utile.
En revanche, en ce qui concerne la standardisation des échanges de données numériques, le bénéfice apporté par une telle standardisation peut s'avérer très important.
C'est pourquoi l'architecture selon l'invention a principalement pour objet de définir le mode de fonctionnement des éléments numériques que comportent les différents sous-ensembles composant un système complexe, et de standardiser les échanges de données numériques entre ces éléments. Elle concerne donc principalement les domaines numériques synchrone 17 et asynchrone 18.
Dans la suite de la description on appelle noeud de traitement, une entité fonctionnelle faisant partie d'un sous-ensemble, et apte à réaliser de manière autonome et intelligente une tâche déterminée, synchrone ou asynchrone, en fonction de paramètres qui lui sont fournis. Ces noeuds de traitement représentent les entités fonctionnelles auxquelles s'applique l'architecture selon l'invention. Une unité fonctionnelle donnée peut selon la fonction qu'elle réalise comporter un ou plusieurs noeuds de traitement. Les noeuds de traitement qui coopèrent pour réaliser une fonction donnée peuvent par ailleurs être situés sur des entités physiques séparées, des circuits imprimés ou des racks par exemple. Indépendamment leurs implantations physiques respectives, l'échange de données entre deux noeuds de traitement est toujours assuré au moyen d'un bus de liaison asynchrone. De même chaque noeud de traitement est relié à la liaison de synchronisation;

Comme l'illustre la figure 1, l'architecture selon l'invention est principalement basée sur des sous-ensembles, en particulier numériques, comportant un ou plusieurs noeuds de traitement asynchrones échangeant des données de manière asynchrone avec d'autres noeuds de traitement.
Cependant, certains noeuds de traitement ayant malgré tout besoin de disposer d'une chronométrie précise pour certaine des tâches qu'ils effectuent, ils comportent également des noeuds de traitement synchrones.

Un même sous-ensemble peut en outre comporter des noeuds de traitement synchrones et d'autres asynchrones.
On peut ainsi caractériser l'architecture par la nature des interfaces que comporte un sous-ensemble adapté à cette architecture, permettant aux différents noeuds de traitement contenus dans ce sous-ensemble de traiter et d'échanger des données, et par la nature des liaisons permettant l'échanges de données entre noeuds de traitement.
Un système conçu autour de l'architecture selon l'invention comporte ainsi une pluralité de liaisons d'échange de données asynchrones 19 et une liaison de synchronisation 110.
Selon l'invention, les liaisons asynchrones 19 sont essentiellement des liaisons de type "point à point", une liaison permettant à un noeud de traitement appartenant à un sous-ensemble donné d'échanger des informations avec d'autres noeuds de traitement appartenant au même sous-ensemble ou à un sous-ensemble différent. La liaison de synchronisation 110, quant à elle, est une liaison unique permettant à un sous-ensemble 111 gérant la synchronisation globale du système d'envoyer à tous les noeuds de traitement un message général de synchronisation.

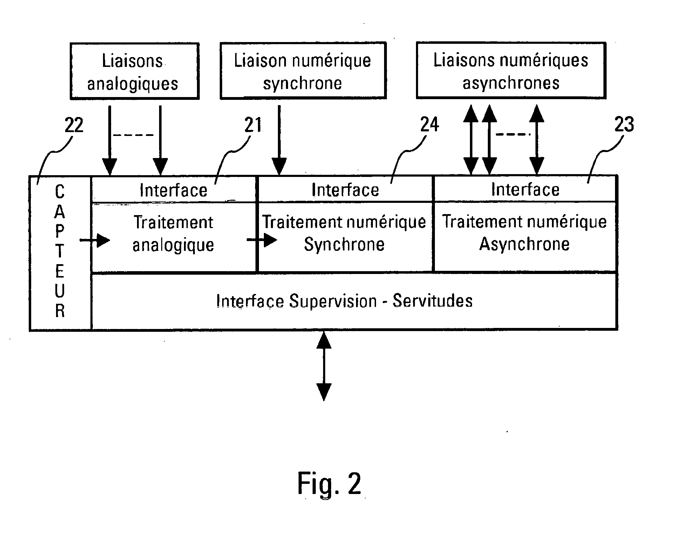

On considère à présent la figure 2 qui présente de manière très générale la structure des interfaces qui équipent un sous-ensemble adapté à l'architecture selon l'invention. L'illustration de la figure 2 correspond à un sous-ensemble type, réalisant des fonctions relatives aux différents domaines d'échange d'information évoqués précédemment. Il est bien entendu envisageable que, du fait des tâches qu'il exécute, un sous-ensemble ne comporte pas d'interface 21 avec le domaine analogique ou encore d'interface 22 avec le milieu extérieur. Dans ce cas, il ne comportera pas d'interface analogique, ni de capteur. En revanche la généralisation des échanges d'information ou de signaux sous forme numérique rend nécessaire la présence d'interfaces numériques, quelle que soit la fonction globale remplie par le sous-ensemble.
Une caractéristique importante de l'invention est permettre une standardisation des échanges, et d'assurer à chaque sous-ensemble un fonctionnement interne aussi indépendant que possible de celui des autres sous-ensembles. A cette fin, un sous-ensemble adapté à l'architecture selon l'invention comporte une (ou plusieurs) interface numérique asynchrone 23 qui lui permet d'exploiter les données qui lui sont transmises par un autre sous-ensemble et de conditionner les données qu'il transmet à un autre sous-ensemble. Il comporte également une interface numérique synchrone 24 lui permettant de réaliser un séquencement interne indépendant pouvant se référer, si la tâche à exécuter le nécessite, à une chronométrie globale du système.
La suite du document porte plus particulièrement sur ces liaisons numériques et sur les interfaces correspondantes.

Comme cela a été dit précédemment, l'architecture selon l'invention met en oeuvre d'une part des liaisons asynchrones permettant l'échange de données entre sous-ensembles, d'autre part une liaison de synchronisation. La liaison de synchronisation relie simultanément tous les sous-ensembles du système auxquels elle fournit un message de synchronisation, une horloge de base H, un top de synchronisation et une référence de date. La liaison de synchronisation fournit en outre un en-tête simplifié permettant à un noeud de traitement effectuant un traitement synchrone, d'associer le message de synchronisation reçu à une donnée asynchrone particulière elle-même caractérisée par l'en-tête (label) du message dans lequel elle est incluse. Selon l'invention l'en-tête simplifié transmis dans le message de synchronisation est une partie de l'en-tête accompagnant la donnée asynchrone correspondante.

Selon le noeud de traitement considéré, celui-ci utilise tout ou partie de ces informations.
La liaison de synchronisation est une liaison unidirectionnelle multi destinataires, fonctionnant en mode broadcast, sur laquelle les messages de synchronisation sont transmis par le sous-ensemble particulier 111 vers les noeuds de traitement des autres sous-ensembles. Les caractéristiques techniques de la liaison de synchronisation selon l'invention sont décrites dans la suite du document.

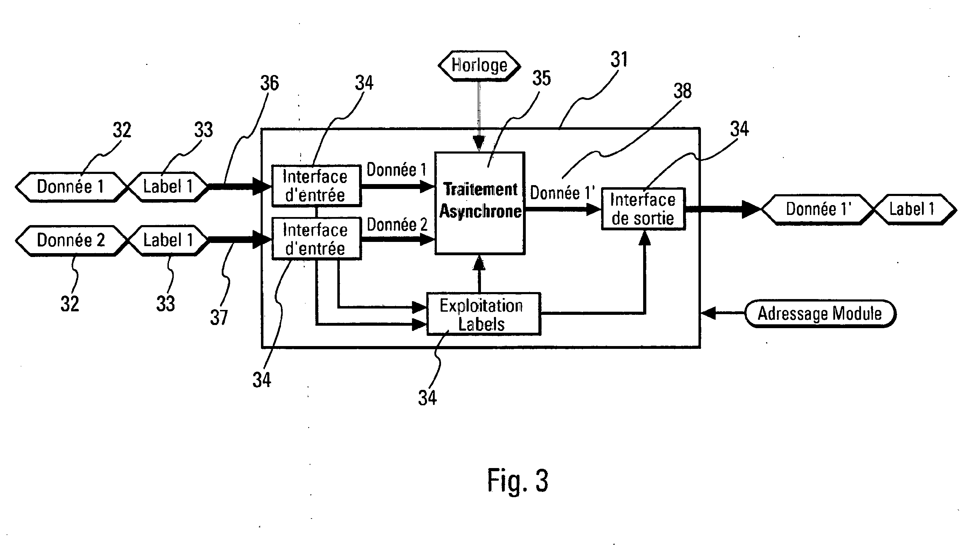

On considère à présent la figure 3 qui représente de manière schématique le principe de gestion des données reçues par un noeud de traitement 31 effectuant un traitement asynchrone 35. Ce traitement est cadencé par l'horloge transmise sur la liaison de synchronisation 110 par le sous-ensemble 111.
Conformément à l'architecture selon l'invention, les données reçues par ce noeud de traitement sont des données transmises par un autre noeud au travers d'une liaison asynchrone 19.
Selon l'invention, toutes les liaisons asynchrones 19 ont une structure identique. Ce sont des liaisons point à point bidirectionnelles, de type "full duplex" par exemple au travers desquelles les données 32 sont échangées entre les noeuds de traitement. S'agissant d'échanges asynchrones, l'identification nécessaire des données 32 transmise, à une phase de fonctionnement du système, est assurée par la transmission d'un en-tête 33 qui accompagne la donnée transmise. Ainsi le noeud de traitement qui reçoit la donnée est informé, en dépouillant le message d'en-tête 33, de la façon dont cette donnée doit être traitée, sans pour autant avoir été informé de l'instant de début de la phase de fonctionnement considérée.
Si l'on prend comme exemple un système radar, dans lequel le rythme de fonctionnement est donné par les instants d'émission de rafales d'impulsions, un module de traitement de signal sera en mesure grâce à l'architecture selon l'invention de traiter de manière asynchrone des données relatives à une rafale émise sans pour autant avoir à considérer l'instant auquel cette rafale a été émise.
Pour traiter correctement une donnée reçue, un noeud de traitement effectuant un traitement asynchrone comporte des moyens 34 pour acquérir, analyser, stocker et restituer cet en-tête. Ces moyens permettent en outre de paramétrer le traitement effectuer en fonction de la nature de la donnée ou des données à traiter.
Ainsi dans l'exemple illustré par la figure 3 le noeud 31 effectue un traitement sur deux flots de données provenant par exemple de deux noeuds de traitement distincts.
Afin de garantir que le traitement effectué est appliqué sur des données appartenant à la même phase de fonctionnement les moyens 34 analyse les en-têtes respectifs des deux données présentes sur chacune des liaisons asynchrones 36 et 37. Dans le cas contraire le traitement n'est par exemple pas effectué. En outre dans le cas où l'une des données est transmise en avance par rapport à l'autre, les moyens 34 peuvent procéder après analyse de l'en-tête à une mise en attente de la donnée transmise en premier. A cet effet le noeud de traitement 31 peut comporter des moyens de mémorisation temporaire non représentés sur la figure.

Le noeud de traitement peut également comporter des moyens non représentés sur la figure pour récupérer l'horloge de base H à partir du message général de synchronisation et ainsi créer ses propres horloges à partir de l'horloge de base.
Une fois le traitement appliqué à la donnée reçue, le noeud de traitement 31associe à la donnée traitée 38 l'en-tête 33 préalablement mémorisé et transmet la donnée précédée de son en-tête au noeud suivant par une autre liaison asynchrone 19.

Selon l'invention, l'en-tête 33 est un message générique, qui contient l'ensemble des informations nécessaires pour que chaque noeud de traitement de la chaîne de traitement puisse déterminer la façon dont il doit traiter la donnée associée à cet en-tête. Ce message est propagé sans changement de structure d'un noeud de traitement à l'autre tout au long de la chaîne de traitement Ainsi aux différents stades de son traitement, une donné est transmise d'un noeud de traitement à un autre accompagnée d'un en-tête de structure unique et invariante.
Le traitement asynchrone des données associé à une structure d'échange asynchrone constitue une caractéristique essentielle avantageuse de l'architecture selon l'invention. Cette association permet en effet de limiter l'influence des variations du flux d'information d'informations traitées par le système sur la charge de calcul global que doit supporter le système. Elle permet en particulier l'existence d'une cadence de circulation variable des données entre les différents noeuds de traitement, les contraintes générales de synchronisation étant supportées au niveau du système global et non au niveau de chaque noeud.

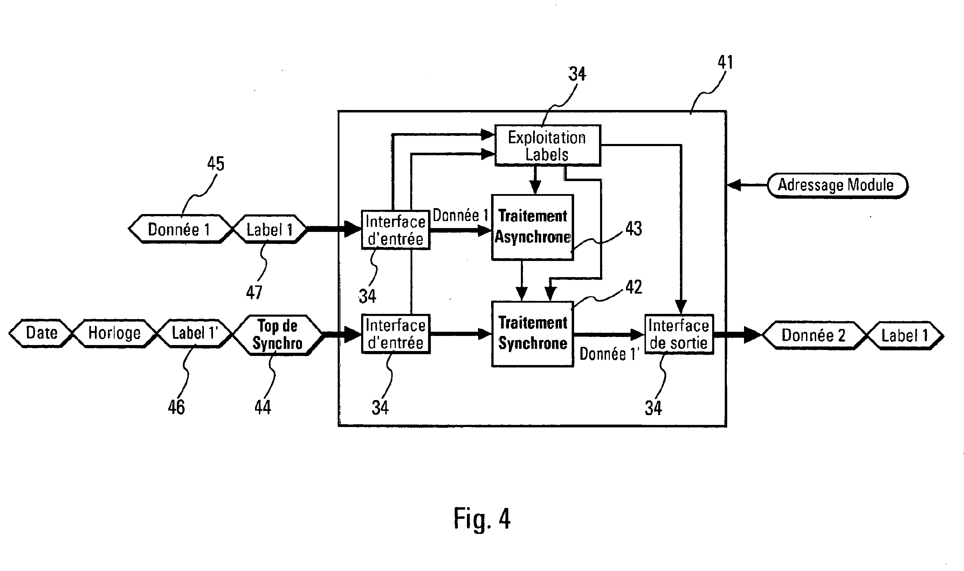

On considère maintenant la figure 4 qui représente de manière schématique le principe de gestion des données reçues par un noeud de traitement 41 effectuant un traitement synchrone 45. Ce type de traitement intervient par exemple dans le cas où des signaux analogiques numérisés à la volée au moyen de l'horloge de base du système, doivent subir un premier traitement qui dépend de la phase de fonctionnement du système correspondant à ces données analogiques. Un tel cas se produit par exemple dans un système radar, notamment au niveau du sous-ensemble récepteur. Le flot de données numérisées correspondant à une rafale d'impulsion émise doit être parfois traité en prenant soin de ne pas traiter les N premières données reçues pour chaque impulsion de la rafale émise. Le nombre N pouvant varier en fonction du type de rafle émise il importe que le premier noeud de traitement puisse connaître l'instant précis d'arrivée des premières données afin d'éliminer les N premières données. Dans un tel cas le noeud de traitement 41 considéré comporte un traitement synchrone 42 lui permettant de traiter les données reçues conformément au séquencement décrit par la donnée de synchronisation 44 transmise par la liaison synchrone. Le noeud de traitement comporte également un traitement asynchrone lui permettant de connaître les paramètres relatifs à la phase de fonctionnement considérée. Dans le cas d'un radar, la donnée asynchrone 45 contient par exemple des informations relatives à la rafale émise, ainsi que des informations sur l'instant auquel les données seront disponibles pour traitement.
Ainsi, en exploitant les informations transmises par la liaison asynchrone le noeud de traitement 41 est en mesure d'effectuer un traitement synchrone conformément au message de synchronisation générique reçu par la liaison synchrone. La concordance entre les données transmise par la liaison asynchrone et le message de synchronisation correspondant est par ailleurs assurée grâce à l'en-tête simplifié 46 transmise dans le message de synchronisation. En effet cet en-tète qui est par exemple une partie de l'en-tête 47 du message asynchrone correspondant à la même phase de fonctionnement du système permet d'identifier et d'associer sans erreur les messages provenant des deux liaisons.

Comme on peut le constater au travers des figures 3 et 4, la liaison de synchronisation grâce au message général qu'elle véhicule est avantageusement d'utilisation universelle dans le système. Elle est à la fois utilisable par un noeud de traitement effectuant un traitement synchrone et par un noeud de traitement effectuant un traitement asynchrone, l'emploi particulier qui en est fait étant déterminé au niveau du noeud de traitement considéré qui peut même héberger des fonctions de traitement synchrones et asynchrones. De la sorte, l'architecture selon l'invention permet de concevoir des systèmes dont les noeuds de traitement sont vus comme des éléments indépendants réalisant des fonctions de manière entièrement autonome, chaque noeud de traitement peut ainsi être conçu de façon à prendre en charge son propre séquencement. Dans une telle architecture, chaque noeud de traitement est considéré comme un simple composant d'une machine unique représentée par le système dans son entier, la structure des échanges internes à cette machine ne dépendant pas des éléments implantés.

Comme l'illustrent également les figures 3 et 4, la liaison de synchronisation 110 distribue simultanément à chaque noeud de traitement une horloge de base H à usage général et un message de synchronisation utilisé principalement par les noeuds de traitement effectuant des opérations synchrones. Ainsi chaque noeud de traitement peut gérer son séquencement interne de manière autonome, asynchrone tout en restant lié à la synchronisation générale du système par une même horloge de base H. Cependant, pour prévenir les conséquences d'une éventuelle avarie portant sur la réception de cette horloge par un ou plusieurs noeuds de traitement ( parasite, alea de fonctionnement au niveau du module de réception de la liaison de synchronisation du noeud de traitement, etc...), conséquence, qui pourrait se faire sentir de manière tardive, du fait de l'asynchronisme du fonctionnement du système, la liaison de synchronisation permet avantageusement à chaque noeud de traitement de vérifier si une telle avarie ne s'est pas produite. A cet effet la liaison de synchronisation distribue à tous les noeuds de traitement une information supplémentaire représentant une date de référence mise à jour en permanence. Cette date de référence évolue au rythme de l'horloge de base H. Chaque noeud de traitement peut utiliser cette date pour la comparer à une date locale évoluant quant à elle au rythme de l'horloge de base réellement reçue. Ainsi, les deux dates ayant été au préalable mises en concordance, à la mise en route du noeud de traitement par exemple, le module de synchronisation peut contrôler périodiquement la concordance des horloges et, en cas de différence, procéder à une nouvelle remise en concordance de la date locale avec la date de référence. Selon une variante possible de mise en oeuvre, le rephasage de la date locale sur la date de référence peut même être réalisé de manière automatique et systématique à chaque réception d'un nouveau message de synchronisation.
La liaison de synchronisation 110 distribue donc trois informations distinctes: une horloge de base H, un top de synchronisation et une date de référence. Ces informations sont en outre accompagnées d'un en-tête simplifié permettant de les associer à des données asynchrones particulières. Ces informations sont accessibles à tous les noeuds de traitement de sorte que bien que chaque noeud de traitement travaille généralement de manière asynchrone, une synchronisation de l'ensemble du système reste assurée.

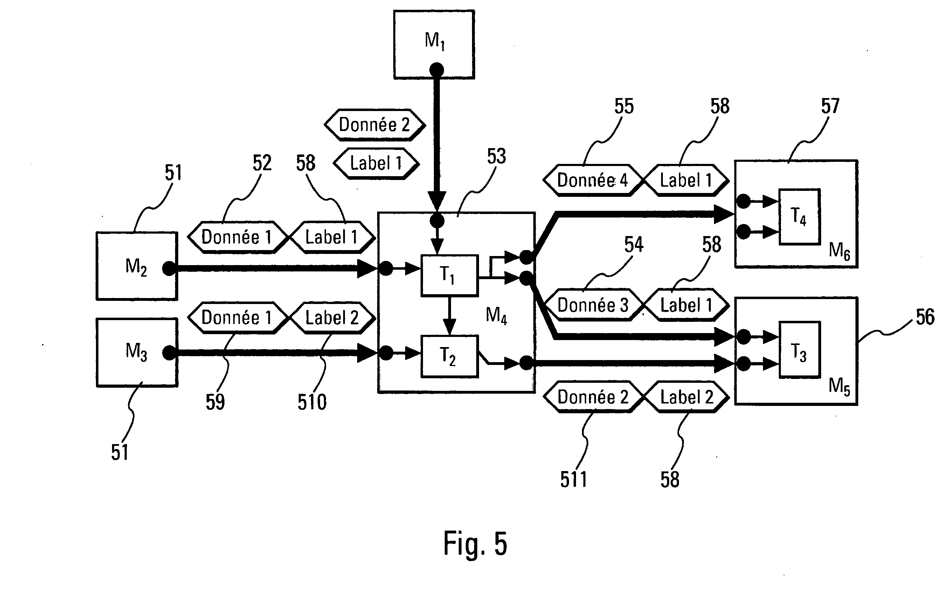

On s'intéresse à présent à la figure 5, pour expliquer comment sont assurés les échanges de données sur les liaisons asynchrones 19.
De manière générale, dans un système complexe, un même flot de donné reçu par le système durant une phase donnée de fonctionnement subit un certain nombre de transformation durant son passage dans les différents noeuds de traitement composant le système. Ainsi, ce flot de donné peut donner naissance après traitement par un noeud de traitement 51 (M₂ ou M₃) à une donnée 52 (59) qui est transmise à un deuxième noeud de traitement 53 (M₄) pour lequel elle constitue une donnée d'entrée. Cette donnée 52 (59) est traitée par M₄ et peut donner naissance à une ou plusieurs données de sortie 54, 55 ou 511, transmises respectivement aux noeuds de traitement 57(M₆) et 55 (M₅).
Ainsi, dans un système de type radar à impulsions par exemple, ce flot de données est constitué par le signal reçu en réponse à l'émission d'une rafale d'impulsions émise selon un mode déterminé. Ce signal est traité après numérisation par les différents noeuds de traitement qui constituent le radar. Dans un tel exemple, le noeud de traitement 51 peut être par exemple chargé d'effectuer un filtrage adaptatif sur le signal et de délivrer une donnée 52 correspondant au signal après filtrage. Cette donnée 52 peut ensuite être transmise au noeud de traitement 53 dont le rôle est de normaliser la donnée 52 par rapport à une valeur moyenne calculée. Le noeud de traitement 53 peut, quant à lui, communiquer la donnée normalisée à un noeud de traitement 57 et la valeur moyenne calculée à un autre noeud de traitement 56.

Dans l'architecture selon l'invention les différents noeuds de traitement travaillent de façon asynchrone les uns des autres. D'autre part, les échanges de données sont également effectués de manière asynchrone au moyen des liaisons 19. Il est donc nécessaire, pour qu'un noeud de traitement qui reçoit des données sur une liaison asynchrone, puisse être en mesure de traiter convenablement cette donnée, que ladite donnée soit accompagnée d'un message d'identification. A cet effet, selon l'invention, les données échangées à travers des liaisons asynchrones sont intégrées dans un message constitué des données proprement dites auxquelles sont associés des en-têtes ou labels qui caractérisent les données. Conformément à l'architecture selon l'invention, comme l'illustre la figure 5, toutes les données issues d'un même flot initial de données, acquises par le système durant une phase donnée de son fonctionnement, sont associées à un même en-tête générique 58 (510) qui contient l'ensemble des informations relatives à cette phase de fonctionnement.
Selon l'invention, chaque module intégré au système comporte donc des moyens lui permettant d'identifier, à partir de l'en-tête associé, le paramétrage de la fonction de traitement qu'il va appliquer à la donnée d'entrée, reçue par le noeud de traitement. Le module dispose également de moyens pour stocker cet en-tête de façon à l'associer aux données de sortie résultant du traitement de la donnée reçue. Chaque donnée de sortie 54, 55 ou 511 est associée à l'en-tête générique 58, 510 qui accompagnait la donnée d'entrée 52, 59 de façon à pouvoir être transmise à un autre noeud de traitement. Chaque donnée de sortie étant associée à un en-tête générique, elle peut être transmise à un noeud de traitement destinataire quelconque en vue de lui appliquer un traitement ultérieur.
Dans le cas d'un système radar évoqué précédemment en exemple, l'en-tête 58 peut par exemple contenir les informations relatives à la rafale d'impulsions émises, telles que la taille des impulsions, leur période de répétition, ainsi que le rang de l'impulsion considérée.

Dans cet exemple, la donnée 55 normalisée par le noeud de traitement 53, issue de la donnée 52, est transmise au noeud de traitement 57 associée au label 58 tandis que la donnée 54 correspondant à la valeur moyenne calculée par le noeud de traitement 53 à partir de la même donnée 52, est transmise au noeud de traitement 56 associée également au label 58.

L'architecture selon l'invention repose ainsi sur une structure générique d'échange de données qui présente l'avantage de rendre possible l'insertion dans une chaîne de traitement de données existante, d'une fonction intercalaire, implémenté par un noeud de traitement donné. Cette insertion est effectuée de manière aisée en intercalant le noeud de traitement ouvrant la liaison asynchrone qui véhiculait la donné à laquelle ont veut appliquer un traitement complémentaire et en établissant une liaison asynchrone entre le noeud de traitement émetteur et le noeud de traitement réalisant la fonction intercalaire d'une part, et une liaison asynchrone entre ce noeud de traitement et le noeud de traitement initialement récepteur. Cette opération d'insertion est avantageusement réalisée sans qu'il soit nécessaire de modifier les noeuds de traitement initialement reliés.

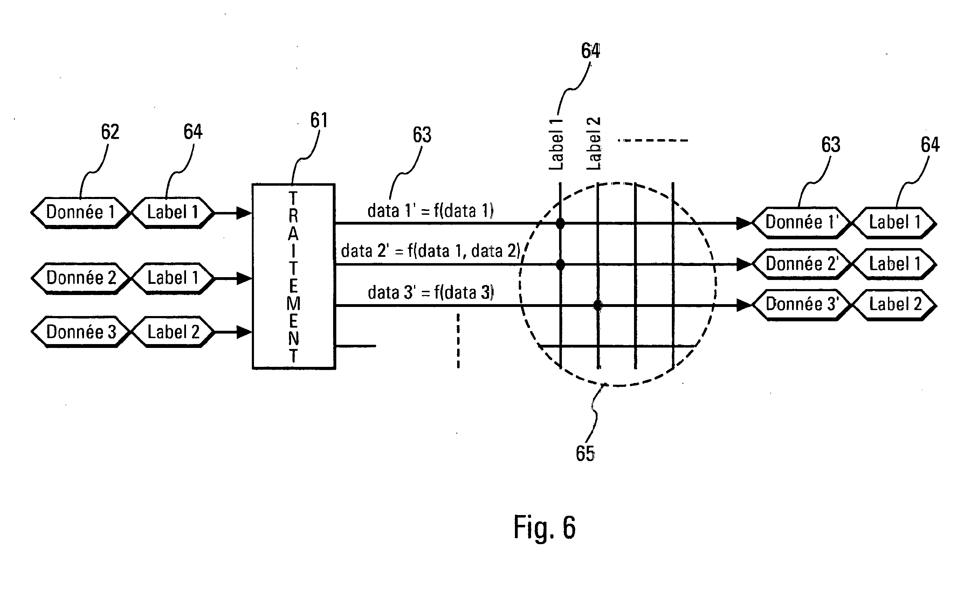

On considère à présent la figure 6. Cette figure illustre le principe de fonctionnement des moyens 34, que comporte un noeud de traitement conforme à l'architecture selon l'invention, qui effectuent l'association des données de sortie avec l'en-tête correspondant. Ces moyens mettent principalement une fonction de stockage, non représentée sur la figure 6 mais représentée sur la figure 3, qui permet de conserver pour chaque donnée reçue l'en-tête qui accompagne cette donnée, et une fonction de routage dont le rôle consiste à associé à chaque donnée de sortie 63, produite par le traitement 61 mis en oeuvre par noeud de traitement considéré, l'en-tête (label) 64 de la donnée d'entré correspondante. La fonction de routage est une fonction spécifique du traitement réalisé par le noeud de traitement considéré. Elle peut par exemple être mise en oeuvre en adressant une matrice d'association symbolisée sur la figure par l'encadré 65. Cette matrice qui associe une ou plusieurs données de sortie 63 à un ou plusieurs labels 64 est élaborée en fonction de la relation liant les données de sortie 63 aux données d'entrée 62.

La suite de la description se rapporte à la nature et à la structure des informations véhiculées par la liaison de synchronisation. Cette partie de la description permettra à l'homme du métier d'apprécier encore mieux les avantages de l'architecture selon l'invention.

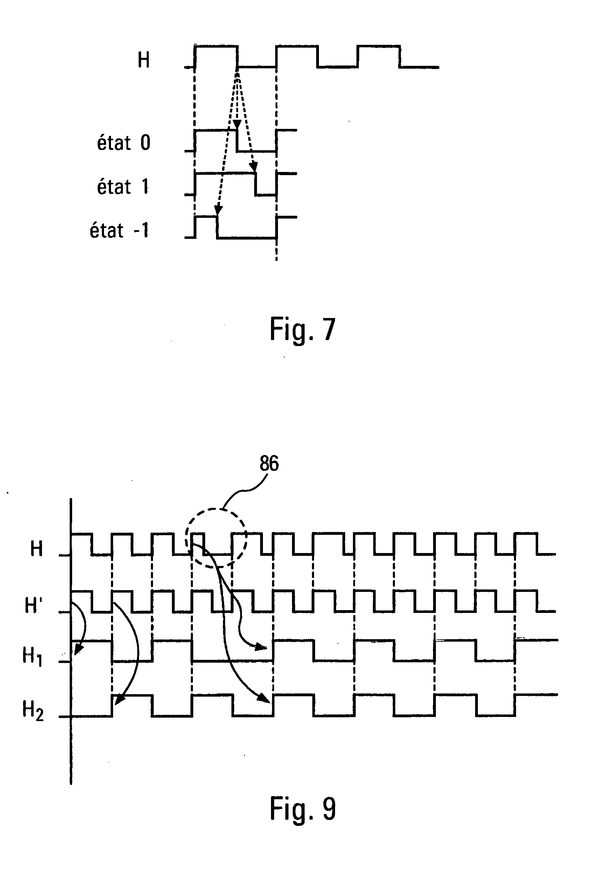

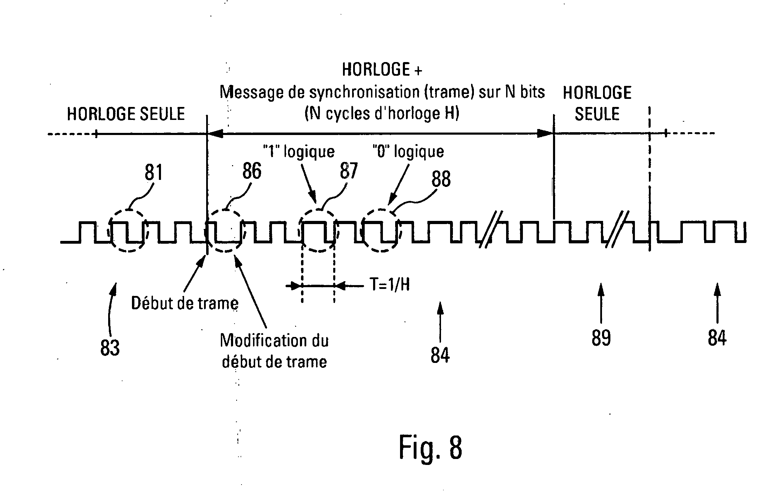

On se réfère à présent aux figures 7 et 8 qui présentent de manière schématique la forme des informations transmises ainsi que le séquencement des échanges qui se produisent sur la liaison de synchronisation.

D'un point de vue général, la liaison synchrone selon l'invention est une liaison de type série, sur laquelle des trames de données binaires sont émises à destination de chaque sous-ensemble. Une trame comporte un nombre fixe de types de données binaires définissant des champs, chaque champ comportant un nombre donné de bits, de sorte que la trame comporte elle-même un nombre déterminé de bits. Le séquencement ainsi que le contenu des trames émises sont par ailleurs constitués par le sous-ensemble 111 chargé de la synchronisation générale. Il est en outre à noter que, selon le nombre de noeuds de traitement que comporte un sous-ensemble, le signal transmis par la liaison synchrone est soit directement traité au niveau du sous-ensemble, soit distribué tel quel aux différents noeuds de traitement qui le constituent.

Selon l'invention, la liaison de donnée synchrone véhicule en permanence une horloge de cadencement H de fréquence fixe synthétisée par le sous-ensemble 111, une horloge de fréquence F= 10 MHz par exemple.
Cette horloge H a pour caractéristique d'être l'horloge de référence de l'ensemble du système qui porte l'architecture selon l'invention. C'est à partir de cette horloge H qui est distribuée à tous les sous-ensembles par la liaison de synchronisation que sont fabriquées au sein de chaque noeud de traitement, les horloges nécessaires au fonctionnement des noeuds de traitement qui composent le sous-ensemble considéré. Dans certains cas ces horloges, dites horloges lentes, sont des horloges de fréquence plus faible que la fréquence F de l'horloge de cadencement H, horloges qui peuvent être obtenues par division de la fréquence F, au moyen de compteurs par exemple. Dans d'autre cas ces horloges sont des horloges de fréquences plus élevées, voire beaucoup plus élevées, que la fréquence F qui sont obtenues par multiplication de la fréquence F, au moyen de circuit à boucle à verrouillage de phase par exemple. Selon l'invention l'horloge de cadencement H est une horloge présentant la stabilité voulue.

Dans le cas particulier d'un système de traitement de signal radar cette horloge doit, par exemple, être d'une stabilité suffisante pour permettre aux sous-ensemble chargés de la conversion analogique numérique des données radar provenant du sous-ensemble récepteur de fabriquer leurs propres horloges d'échantillonnage dont la fréquence est multiple de la fréquence F. Elle doit également par exemple être d'une précision suffisante pour permettre la synthèse d'oscillateurs locaux fonctionnant à des fréquences intermédiaires plusieurs dizaines de fois supérieures à la fréquence F. De la sorte l'horloge de cadencement H étant distribuée à tous les sous-ensembles par la liaison de synchronisation, les noeuds de traitement bénéficient avantageusement d'une référence de fréquence commune précise et stable. En outre la mise en oeuvre des circuits multiplicateurs de fréquence nécessaires à la réalisation de ces signaux multiples de la fréquence F, est avantageusement facilitée par le mode de modulation du facteur de forme de l'horloge H, modulation qui conserve constant l'écart temporel séparant les fronts montants de l'horloge H.

La liaison de synchronisation véhicule également, lorsqu'il y a lieu des informations de synchronisation diverses qui permettent en particulier aux sous-ensembles d'associer entre elles des données ayant pour origine des sous-ensembles différents. Ces informations sont codées sous la forme de données binaires séries.

Dans le but de ne pas interrompre la transmission permanente de l'horloge de séquencement, les informations de synchronisation sont transmises, selon l'invention, en procédant à une modulation particulière du facteur de forme de l'horloge H. Selon l'invention cette modulation comporte, comme l'illustre la figure 7 trois états distincts. Un premier état correspondant à un bit de donné de valeur 0, un second état correspondant à un bit de donnée de valeur 1, et un troisième état correspondant à un bit de donnée

-1. De la sorte pour transmettre sur la liaison de synchronisation une donnée binaire égale par exemple à 101, il convient de moduler le facteur de forme de l'horloge H sur trois périodes pour transmettre successivement un état 1, un état 0, puis un autre état 1. Chaque bit de donnée a ainsi une durée égale à T.
Dans l'exemple non limitatif de la figure 7, Le codage d'un état 0 est obtenu en maintenant le facteur de forme à ½, la durée de l'état haut de l'horloge étant égale à celle de l'état bas, tandis que le codage d'un état 1 est obtenu en modifiant le facteur de forme de façon à ce que la durée de l'état haut de l'horloge soit égal au ¾ de la période de H, et que le codage d'un état -1 est obtenu en modifiant le facteur de forme de façon à ce que la durée de l'état haut de l'horloge soit égal à ¼ de la période de H.
Le codage de l'horloge H est utilisé pour transmettre des données binaires: chaque bit peut donc prendre seulement deux états (0 ou 1). Selon l'invention, le troisième état de modulation est utilisé comme état indicateur, comme top de synchronisation. Ce top de synchronisation a deux usages principaux.

Le top de synchronisation a tout d'abord pour rôle de signaler la transmission d'une trame de données sur la ligne. Ainsi selon l'invention la transmission d'une trame de donnée est toujours signalée par la transmission d'un bit, ou top, de synchronisation. Le chronogramme de la figure 8 décrit les différents états possibles de la liaison de synchronisation.
Sur cette figure on peut distinguer les deux modes de fonctionnement possibles, 83 et 84, de la ligne de synchronisation. Le mode 83 correspond au cas où aucune information de synchronisation n'est transmise. L'horloge est alors transmise seule sous la forme d'un signal périodique avec un facteur de forme égale à ½. Le mode 84, quant à lui correspond au cas où des informations de synchronisation sont transmises sur la ligne de synchronisation. Dans ce mode de fonctionnement le facteur de forme de l'horloge H transmise est modulé de façon à transmettre d'une part un top de synchronisation signalant le début de transmission d'une trame de données, puis à transmettre les bits de données, de valeur 1 ou 0, constituant la trame. La modulation du facteur de forme est réalisée modifiant la position du front descendant 85 des créneaux d'horloge considérés, tout en maintenant constante la période de l'horloge H de sorte que l'espacement temporel des fronts montant est maintenu constant et égal à T.
L'enchaînement des modes de fonctionnement au cours du temps est essentiellement dépendant de l'application considérée. Ainsi la liaison de synchronisation peut par exemple fonctionner dans un mode 83 pendant un laps de temps donné correspondant à une phase d'initialisation, puis dans un mode 84 pendant un laps de temps de durée indéfinie correspondant à l'envoi permanent de trames de données dans une phase de fonctionnement opérationnel, l'envoi d'une trame pouvant être séparée des envois voisins, comme l'illustre la figure 8, par de courts intervalles de temps durant lesquels la liaison fonctionne dans le mode 83.

On considère à présent la figure 9.
Selon l'invention, le top de synchronisation a également pour rôle de permettre la mise en phase de l'ensemble des horloges lentes, déduite de l'horloge H par division de fréquence (H/2, H/4, ...) générées par les différents sous-ensembles. Le mécanisme de cette mise en phase est illustré par la figure 9. Il consiste dans son principe, pour chaque sous-ensemble, à détecter l'apparition du bit 86 de début de trame et à synchroniser, si nécessaire, le front montant de l'horloge considérée avec le front montant du bit indicateur de début de trame 86. La figure 9 illustre l'exemple de deux horloges H₁ et H₂ générée par deux sous-ensembles différents, par division par 2 de la fréquence de H. Cet exemple met en évidence le fait que deux horloge de même fréquence déduites de H peuvent cependant être décalées. Elle montre également qu'en utilisant simplement le top de synchronisation, constitué par le bit 86 de signalisation du passage d'une trame de données, chaque sous-ensemble peut, de manière entièrement autonome, procéder à la mise en phase des horloges lentes générées à partir de H. La mise en phase ne nécessite ainsi avantageusement aucune procédure générale particulière. De la sorte chaque sous-ensemble peut effectuer, sitôt son initialisation terminée par exemple une mise en phase de ses horloges.

Dans une forme préférée de mise en oeuvre de la liaison de synchronisation, le top de synchronisation est transmis de manière périodique, sitôt que le sous-ensemble 111 chargé de la synchronisation générale du système et qui gère cette liaison est en fonctionnement, après une phase d'initialisation par exemple. Dans ce mode de fonctionnement préféré le top de synchronisation est transmis de manière périodique, même si aucune information de synchronisation utile n'est transmise. Dans ce dernier cas, une trame factice est transmise, trame dont l'un des champs de bits contient une donnée informant les différents sous-ensembles que les données contenues dans la trame ne sont pas à prendre en compte. De la sorte la liaison de synchronisation est le sièges d'une transmission permanente de trames qui peuvent être significative ou non. Le top de synchronisation est ainsi avantageusement transmis de manière périodique et fréquente. La mise en phase des horloges d'un sous-ensemble peut ainsi être réalisée dans un temps très court. Cette caractéristique avantageuse permet en particulier à chaque sous-ensemble, lors de la mise en route générale du système, de procéder à la synchronisation de ses horloges sitôt que son initialisation et celle du sous-ensemble 111 chargé de la synchronisation générale sont terminées, sans avoir à attendre que des données de synchronisation opérationnelles circulent sur la liaison. Le sous-ensemble 111 n'a pour cela qu'à transmettre des trames factices.
Ce mode de synchronisation, avantageusement simple de mise en oeuvre, présente donc l'avantage de ne nécessiter aucun signal de synchronisation spécifique.
Il permet également avantageusement à chacun des noeuds de traitement du système d'effectuer sa propre synchronisation de manière indépendante. De la sorte lorsqu'un noeud de traitement est contraint à procéder à propre réinitialisation, par suite à un problème interne de fonctionnement par exemple, il se trouve en mesure, dés que sa réinitialisation est terminée, de resynchroniser ses horloges avec l'ensemble des horloges système sans requérir une phase de resynchronisation générale de la part du système. De même, lors de la mise en route du système, aucune procédure particulière de synchronisation des horloges n'est nécessaire, chaque noeud de traitement procédant à la synchronisation de ses propres horloges lorsqu'il a terminé son initialisation.

En ce qui concerne les trames de données il est à noter que celles-ci sont, comme cela a été dit précédemment, constituées d'un nombre fixe de bits, les bits composant une trame étant regroupés en champs, chaque champ correspondant à une information de synchronisation particulière, codée sur un nombre de bit donné.
La nature et la taille des informations transmises varient en pratique largement d'une application à l'autre. Cependant, certaines informations dont l'échange est une caractéristique importante de la structure selon l'invention sont nécessairement présentes. Ainsi une trame selon l'invention véhicule, comme il a également été dit précédemment, une référence de date commune à l'ensemble des éléments du système Cette date permet en particulier de référencer certaines informations traitées à une référence de temps plus générale commune à plusieurs systèmes échangeant des informations par exemple.
La trame selon l'invention véhicule également un en-tête simplifié qui est une partie de l'en-tête accompagnant la donnée asynchrone correspondante et qui permet à un noeud de traitement d'associer le message de synchronisation reçu à une donnée asynchrone particulière elle-même caractérisée par l'en-tête (label) du message dans lequel elle est incluse. Dans la forme préférée de mise en oeuvre, la trame de donnée selon l'invention comporte également un champ de données permettant aux sous-ensemble de connaître la nature, réelle ou factice, de la trame considérée. Outre ces données caractéristiques une trame selon l'invention peut également comporter un certain nombre de champs de données dont le contenu est utilisé pour définir par exemple la date à laquelle les informations contenues dans la trame doivent être prises en compte par les noeuds de traitement. On peut ainsi préciser lorsqu'il s'agit d'un trame réellement opérationnelles dans combien de temps, exprimé en nombre de périodes T, après réception de la trame, les informations de synchronisation contenues seront applicables.

Le tableau ci-dessous présente un exemple, conforme à l'invention, de structure de trame de données pouvant être utilisée dans un système radar pour les échanges entre le sous-ensemble de synchronisation 111 et les différents noeuds de traitement qui constituent le système utilisant une architecture selon l'invention.

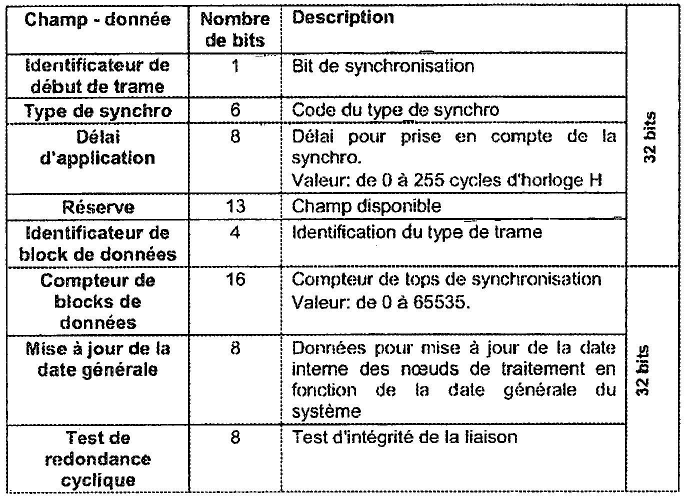

Dans l'exemple décrit ici, les échanges de données sur la liaison de synchronisation sont portés par des trames de 64 bits, le premier bit correspondant au bit de début de trame qui sert également à synchroniser les horloges lentes.
La trame prise comme exemple comporte ensuite un champ de 6 bits permettant de définir le type de synchronisation effectuée. Ces six bits peuvent ainsi être utilisés pour définir s'il s'agit d'une trame relative à la synchronisation au rythme de la récurrence, c'est à dire de l'émission des impulsions radar; au rythme de la rafale, c'est à dire au rythme d'un groupe d'impulsion pour lesquelles les signaux reçus sont traités de manière cohérente; ou encore au rythme du tour d'antenne et du passage du faisceau de l'antenne au nord.
La trame prise comme exemple comporte également, conformément à l'invention, un champ de données permettant de connaître l'instant d'application des données contenues dans la trame. Dans cet exemple le champ "Délai d'application" s'étend sur 8 bits ce qui permet de définir un retard allant de 0 à 255 cycles d'horloge H.

Cette trame comporte en outre un champ de données relatif au type de trame émise. Ce champ d'une taille de 4 bits permet de définir s'il s'agit d'une trame opérationnelle, d'une trame de test ou encore d'une trame fictive.
Elle comporte encore un compteur d'événements, d'une dynamique de 16 bits, permettant d'attribuer à l'événement considéré, début de récurrence ou de rafales par exemple, associé aux informations contenues dans la trame.

La trame prise comme exemple comporte encore, conformément à l'invention, un champ de données permettant à chaque noeud de traitement de synchroniser sa date interne à la date générale. Dans l'exemple illustré par le tableau ci-dessus la date générale est définie sur une dynamique de 64 bits dont la mise à jour est réalisée par quartets, en commençant la mise à jour par le quartet correspondant aux quatre bits de poids faible du compteur qui gère la date générale. De la sorte, le champ de données de synchronisation sur la date générale comporte deux champs séparés, un champ de 4 bits permettant de connaître le rang du quartet transmis et un autre champ de 4 bits donnant la valeur du quartet correspondant. Dans l'exemple, la date générale est ainsi globalement mise à jour après transmission de 16 trames successives.

La trame prise comme exemple comporte enfin un champ de données contenant des informations relatives à un test de redondance cyclique, la donnée contenue permettant à chaque noeud de traitement de déterminer si la trame reçue est exempte d'erreur de transmission ou dans le cas contraire de tenter de restituer l'intégrité des informations contenues dans la trame.

D'une manière plus générale, il est à noter que la structure des informations échangées sur la liaison de synchronisation se prête avantageusement à la mise en oeuvre de moyens permettant de garantir l'intégrité des informations transmises.

Ainsi en ce qui concerne l'indication de la présence d'une trame, il est possible d'émettre avant la trame, au lieu du simple top de synchronisation, une séquence ternaire déterminée, basée sur les états 0, 1 et -1, dont la reconnaissance permet d'identifier le top de synchronisation avec le minimum d'erreur. Ainsi par exemple il est possible de matérialiser le top de synchronisation par une séquence de 7 bits et de mettre en oeuvre un corrélateur ternaire pour la reconnaissance du top de synchronisation, corrélateur dont la sortie fournit une valeur égale à 7 à l'instant exact du passage la séquence correspondant au top de synchronisation.
De même il est possible en ce qui concerne la trame de données, de dimensionner celle-ci pour que les données binaires soient codées à l'aide d'un code détecteur et correcteur d'erreurs. La taille des données codées dépend alors du nombre d'erreurs que l'on souhaite pouvoir détecter et du nombre que l'on souhaite pouvoir corriger de manière automatique. Ainsi il est par exemple possible de sécuriser l'intégrité des données transmises dans une trame de 64 bits en prévoyant de coder chaque groupe de 16 bits de données selon un code, de type code de hamming de distance 4. permettant de détecter trois erreurs simultanées et d'en corriger deux, Un tel code a pour effet d'étendre la taille de la trame à 88 bits (i.e.4 fois 16+6 bits).

## Revendications

1. Architecture de système électronique comportant une pluralité de noeuds de traitement (31, 41), chaque noeud de traitement réalisant une fonction ou une partie d'une fonction mise en oeuvre par le système, chaque noeud de traitement (53) échangeant des données (52, 59, 54, 55, 511) avec d'autres noeuds de traitement (51, 56, 57) au travers de liaisons synchrones ou asynchrones et traitant ces données de manière autonome conformément à son séquencement interne, de façon à réaliser des traitements synchrones ou asynchrones de ces données, les données étant accompagnées d'un en-tête générique (58, 510) comportant des informations identifiant une phase de fonctionnement du système à laquelle elles se rapportent et des informations définissant, pour l'ensemble des noeuds de traitement, l'ensemble des paramètres nécessaires à leur fonctionnement pour la phase considérée;
**caractérisée en ce qu'**elle comporte en outre une liaison série de synchronisation (110) unique desservant l'ensemble des noeuds de traitement et qui délivre à tous les noeuds de traitement une horloge de référence (81), de fréquence fixe sur laquelle est codé un message général de synchronisation comportant un top de synchronisation (44, 86) déterminant l'instant pour lequel un message de synchronisation (84) est portée par l'horloge de référence, une date de référence et en-tête simplifié, l'en-tête simplifié comportant les informations identifiant une phase donnée de fonctionnement du système;
chaque noeud de traitement comportant des moyens d'interface (34) avec la liaison de synchronisation, configurés pour:
- réaliser un séquencement interne autonome à partir de l'horloge de référence (83), le séquencement étant réalisé en synthétisant les horloges internes à partir de l'horloge de référence;
- exploiter l'en-tête simplifié (46) du message de synchronisation de façon à identifier la phase de fonctionnement indiquée dans l'en-tête simplifié, et réaliser un traitement synchrone (42) des données relatives à cette phase de fonctionnement, une donnée (45) étant considérée par le traitement comme relative à la phase de fonctionnement considérée si l'en-tête générique (47) qui lui est associé contient des informations identifiant la même phase de fonctionnement que celle contenue dans l'en-tête simplifié (46) du message de synchronisation considéré.

2. Architecture de système électronique selon la revendication 1 selon laquelle chaque noeud de traitement (31, 41) comporte des moyens propres pour implémenter une date locale et pour comparer périodiquement cette date locale à la date de référence.

3. Architecture de système électronique selon l'une des revendications 1 ou 2, dans laquelle la liaison de synchronisation transmet une horloge de cadencement H (83), un top de synchronisation (86) et des trames de données binaires (87, 88), le top de synchronisation et les données binaires composant les trames étant transmis par modulation du facteur de forme de l'horloge H, la modulation conservant constant l'écart temporel (T) séparant les fronts montants de l'horloge H.

4. Architecture selon la revendication 3, dans laquelle la modulation du facteur de forme de l'horloge H comprend 3 états:
- un état 0 (88) pour lequel l'état haut de l'horloge H à une durée égale à celle de l'état bas, le facteur de forme étant égal à ½,
- un état 1 (87) pour lequel l'état haut de l'horloge H a une durée supérieure à celle de l'état bas, le facteur de forme étant supérieur à ½,
- un état -1 (86) pour lequel l'état haut de l'horloge H a une durée inférieure à celle de l'état bas, le facteur de forme étant inférieur à ½,
les valeurs des données binaire des trames étant codées sur les deux états 0 (88) et 1 (87), le top de synchronisation étant identifié par le code -1 (86).

5. Architecture selon l'une des revendications 3 à 4 dans laquelle la transmission d'une trame de données sur la liaison de synchronisation est signalée par la transmission d'un top de synchronisation.

6. Architecture selon l'une quelconque des revendications 3 à 5, dans laquelle chaque noeud de traitement (31, 41) effectue la synchronisation de ses horloges lentes au moyen du top de synchronisation (86).

7. Architecture selon l'une quelconque des revendications 3 à 6, dans laquelle le top de synchronisation (86) est émis périodiquement, accompagné d'une trame de données (84) contenant des informations de synchronisation utiles ou une trame factice contenant des données non significatives.

8. Architecture selon la revendication 7, dans laquelle chaque trame transmise (84) comporte un champ de bits permettant d'indiquer si cette trame est une trame réelle ou si c'est une trame factice.

9. Architecture selon l'une quelconque des revendications 3 à 8, dans laquelle le top de synchronisation (86) est transmis sur la liaison de synchronisation sous la forme d'une séquence ternaire dont la structure est choisie de façon à ce que la détection du top de synchronisation par les sous-ensembles soit réalisée au moyen d'un corrélateur ternaire par la détection d'un pic de corrélation.

10. Architecture selon l'une quelconque des revendications 3 à 9, dans laquelle les informations contenues dans la trame binaire font l'objet d'un codage au moyen d'un code détecteur et correcteur d'erreurs.

11. Système radar comportant des moyens de traitement formés par une pluralité de sous-ensembles chaque sous-ensemble comportant une pluralité de noeuds de traitement (31, 41), chaque noeud de traitement-réalisant de manière autonome une fonction ou une partie d'une fonction mise en oeuvre par les moyens de traitement, **caractérisé en ce que** chaque noeud de traitement est configuré pour s'interfacer avec une pluralité de liaisons asynchrones d'échanges de données et une liaison de synchronisation et former une architecture selon une quelconque des revendications 1 à 10.

## Patentansprüche

1. Architektur eines elektronischen Systems, das eine Vielzahl von Verarbeitungsknoten (31, 41) aufweist, wobei jeder Verarbeitungsknoten eine Funktion oder einen Teil einer Funktion durchführt, die von dem System durchgeführt wird, wobei jeder Verarbeitungsknoten (53) Angaben (52, 59, 54, 55, 511) mit anderen Verarbeitungsknoten (51, 56, 57) durch synchrone oder asynchrone Verbindungen austauscht und diese Angaben autonom gemäß seiner internen Sequenzierung derart verarbeitet, dass synchrone oder asynchrone Verarbeitungen dieser Angaben durchgeführt werden, wobei die Angaben von einem generischen Kopf (58, 510) begleitet werden, der Informationen aufweist, die eine Funktionsphase des Systems identifizieren, auf die sie sich beziehen und Informationen, die für die Gesamtheit der Verarbeitungsknoten die Gesamtheit der Parameter definieren, die für ihre Funktion für die betreffende Phase notwendig sind,
**dadurch gekennzeichnet, dass** sie ferner eine einzige serielle Synchronisationsverbindung (110) aufweist, die die Gesamtheit der Verarbeitungsknoten bedient und die allen Verarbeitungsknoten einen Referenz-Impuls (81) bereitstellt mit einer festen Frequenz, worauf eine allgemeine Synchronisierungsnachricht codiert ist, die einen Synchronisationstop (44, 86), der den Moment bestimmt, für den eine Synchronisierungsnachricht (84) von dem Referenz-Impuls getragen wird, ein Referenzdatum und einen vereinfachten Kopf aufweist, wobei der vereinfachte Kopf Informationen aufweist, die eine bestimmte Funktionsphase des Systems identifizieren,
wobei jeder Verarbeitungsknoten Schnittstellenmittel (34) mit der Synchronisationsverbindung aufweist, die konfiguriert sind, um:
- ausgehend vom Referenz-Implus (83) eine autonome interne Sequenzierung durchzuführen, wobei die Sequenzierung durch Synthetisieren der internen Impulse ausgehend vom Referenz-Impuls durchgeführt wird,
- den vereinfachten Kopf (46) der Synchronisierungsnachricht derart zu nutzen, dass die in dem vereinfachten Kopf angegebene Funktionsphase identifiziert wird und eine synchrone Verarbeitung (42) der Angaben durchgeführt, die sich auf diese Funktionsphase beziehen, wobei eine Angabe (45) von der Verarbeitung als relativ zur entsprechenden Funktionsphase angesehen wird, wenn der generische Kopf (47), der ihr zugeordnet ist, Informationen enthält, die dieselbe Funktionssphase identifizieren wie die, die im vereinfachten Kopf (46) der entsprechenden Synchronisierungsnachricht enthalten ist.

2. Architektur eines elektronischen Systems nach Anspruch 1, wobei jeder Verarbeitungsknoten (31, 41) eigene Mittel aufweist, um eine lokale Angabe zu implementieren und periodisch diese lokale Angabe mit der Referenzangabe zu vergleichen.

3. Architektur eines elektronischen Systems nach einem der Ansprüche 1 oder 2, wobei die Synchronisationsverbindung einen Taktimpuls H (83), einen Synchronisationstop (86) und Raster binärer Angaben (87, 88) überträgt, wobei der Synchronisationstop und die binären Angaben, die die Raster bilden, durch Modulation des Formfaktors des Impulses H übertragen werden, wobei die Modulation den Zeitabstand (T), der die aufsteigenden Fronten des Impulses H trennt, konstant hält.

4. Architektur nach Anspruch 3, wobei die Modulation des Formfaktors des Impulses H 3 Zustände umfasst:
- einen Zustand 0 (88), für den der hohe Zustand des Impulses H eine Dauer hat, die gleich der Dauer des niedrigen Zustands ist, wobei der Formfaktor gleich ½ ist,
- einen Zustand 1 (87), für den der hohe Zustand des Impulses H eine größere Dauer hat als die Dauer des niedrigen Zustands, wobei der Formfaktor größer als ½ ist,
- einen Zustand -1 (86), für den der hohe Zustand des Impulses H eine kleinere Dauer hat als die Dauer des niedrigen Zustands, wobei der Formfaktor kleiner als ½ ist,
wobei die Werte der binären Angaben der Raster auf den zwei Zuständen 0 (88) und 1 (87) codiert sind, wobei der Synchronisationstop durch den Code -1 (86) identifiziert ist.

5. Architektur nach einem der Ansprüche 3 bis 4, wobei die Übertragung eines Angabenrasters über die Synchronisationsverbindung durch die Übertragung eines Synchronisationstops angezeigt wird.

6. Architektur nach einem der Ansprüche 3 bis 5, wobei jeder Verarbeitungsknoten (31, 41) die Synchronisierung seiner langsamen Impulse mittels des Synchronisationstops (86) durchführt.

7. Architektur nach einem der Ansprüche 3 bis 6, wobei der Synchronisationstop (86) in der Begleitung eines Angabenrasters (84), das nützliche Synchronisationsinformationen enthält, oder eines Scheinrasters, das nicht signifikante Angaben enthält, periodisch gesendet wird.

8. Architektur nach Anspruch 7, wobei jedes übertragene Raster (84) ein Bitfeld aufweist, das erlaubt anzugeben, ob dieses Raster ein reales Raster ist oder ob es ein Scheinraster ist.

9. Architektur nach einem der Ansprüche 3 bis 8, wobei der Synchronisationstop (86) über die Synchronisationsverbindung in Form einer ternären Sequenz übertragen wird, deren Struktur derart ausgewählt ist, dass die Detektion des Synchronisationstops durch die Untergruppen mit Hilfe eines ternären Korrelators durch die Detektion einer Korrelationsspitze durchgeführt wird.

10. Architektur nach einem der Ansprüche 3 bis 9, wobei die in dem binären Raster enthaltenen Informationen Gegenstand einer Codierung mit Hilfe eines Fehlerdetektions- und -korrekturcodes sind.

11. Radarsystem, das Verarbeitungsmittel aufweist, die von einer Vielzahl von Untergruppen gebildet werden, wobei jede Untergruppe eine Vielzahl von Verarbeitungsknoten (31, 41) aufweist, wobei jeder Verarbeitungsknoten autonom eine Funktion oder einen Teil einer Funktion durchführt, die von den Verarbeitungsmitteln durchgeführt wird, **dadurch gekennzeichnet, dass** jeder Verarbeitungsknoten konfiguriert ist, um sich mit einer Vielzahl asynchroner Austauschverbindungen von Angaben und einer Synchronisationsverbindung zu vernetzen und eine Architektur nach einem der Ansprüche 1 bis 10 zu bilden.

## Claims

1. An electronic system architecture comprising a plurality of processing nodes (31, 41), with each processing node carrying out a function or part of a function implemented by said system, each processing node (53) exchanging data (52, 59, 54, 55, 511) with other processing nodes (51, 56, 57) through synchronous or asynchronous links and autonomously processing said data according to its internal sequencing, so as to carry out synchronous or asynchronous processing of said data, with said data being accompanied by a generic header (58, 510) comprising information identifying an operating phase of said system, to which it relates, and information defining, for all of the processing nodes, all of the parameters required to operate them for the considered phase,
**characterised in that** it further comprises a single synchronisation serial link (110) serving all of the processing nodes and which delivers a reference clock (81) to all of the processing nodes, which reference clock is of fixed frequency on which a general synchronisation message is encoded that comprises a synchronisation signal (44, 86) determining the instant at which a synchronisation message (84) is carried by said reference clock, a reference time and a simplified header, said simplified header comprising the information that identifies a given operating phase of said system;
with each processing node comprising means (34) for interfacing with said synchronisation link, which means are configured to:
- carry out autonomous internal sequencing on the basis of said reference clock (83), with said sequencing being carried out by synthesising the internal clocks on the basis of said reference clock;
- use said simplified header (46) of said synchronisation message so as to identify the operating phase indicated in said simplified header, and to carry out synchronous processing (42) of the data relating to said operating phase, with an item of data (45) being considered by the processing to relate to the considered operating phase if the generic header (47) that is associated therewith contains information identifying the same operating phase as that contained in said simplified header (46) of the considered synchronisation message.

2. The electronic system architecture according to claim 1, according to which each processing node (31, 41) comprises specific means for implementing a local time and for regularly comparing said local time with said reference time.

3. The electronic system architecture according to claim 1 or 2, wherein said synchronisation link transmits a timing clock H (83), a synchronisation signal (86) and binary data frames (87, 88), with said synchronisation signal and said binary data constituting the frames being transmitted by modulating the form factor of said clock H, with the modulation maintaining the time difference (T) constant that separates the rising edges of said clock H.

4. The architecture according to claim 3, wherein the modulation of the form factor of said clock H comprises three states:
- a state 0 (88) for which the duration of the high state of said clock H is equal to that of the low state, with the form factor being equal to ½;
- a state 1 (87) for which the duration of the high state of said clock H is greater than that of the low state, with the form factor being greater than ½;
- a state -1 (86) for which the duration of the high state of said clock H is less than that of the low state, with the form factor being less than ½,
with the values of the binary data of the frames being coded on the two states 0 (88) and 1 (87), with the synchronisation signal being identified by the -1 (86) code.

5. The architecture according to any one of claims 3 to 4, wherein the transmission of a data frame on the synchronisation link is signalled by the transmission of a synchronisation signal.

6. The architecture according to any one of claims 3 to 5, wherein each processing node (31, 41) synchronises its slow clocks by means of said synchronisation signal (86).

7. The architecture according to any one of claims 3 to 6, wherein said synchronisation signal (86) is regularly transmitted, accompanied by a data frame (84) containing useful synchronisation information or a dummy frame containing non-significant data.

8. The architecture according to claim 7, wherein each transmitted frame (84) comprises a field of bits for indicating whether this frame is a real frame or a dummy frame.

9. The architecture according to any one of claims 3 to 8, wherein said synchronisation signal (86) is transmitted on said synchronisation link in the form of a ternary sequence, the structure of which is selected so that the detection of said synchronisation signal by sub-sets is carried out by means of a ternary correlator by the detection of a correlation peak.

10. The architecture according to any one of claims 3 to 9, wherein the information contained in the binary frame is subject to encoding by means of an error detecting and correcting code.

11. A radar system comprising processing means formed by a plurality of sub-sets, with each sub-set comprising a plurality of processing nodes (31, 41), each processing node autonomously carrying out a function or part of a function implemented by said processing means, **characterised in that** each processing node is configured to interface with a plurality of asynchronous links for data exchanges and a synchronisation link and to form an architecture according to any one of claims 1 to 10.
